# EUROPEAN PATENT SPECIFICATION

(11) **EP 2 164 136 B1**
(45) Date of publication and mention of the grant of the patent: **16.11.2016**
(21) Application number: 09170269.6
(22) Date of filing: 15.09.2009
(51) Int. Cl.: H01R 13/11, H01R 13/15, H01R 13/631, H01H 71/08, H02B 1/21, H01R 9/26, H01R 25/14

(54) **Double-grip electrical interconnection clamp**
Lamellenkontaktkäfig
Cage de contact à lamelles

(30) Priority: 15.09.2008 IT RM20080133 U
(43) Date of publication of application: 17.03.2010
(73) Proprietor: BTICINO S.P.A., Viale Borri, 231 21100 Varese (IT)
(72) Inventor: Fusetti, Massimo, 21100 Varese (IT)
(74) Representative: Carangelo, Pierluigi

(56) References cited:
- EP-A1- 0 107 611
- DE-A1- 4 405 900
- DE-C- 909 717
- FR-A1- 2 377 103
- GB-A- 869 810
- US-A- 2 751 471
- US-A- 2 872 659
- US-A- 3 201 556
- US-A- 4 423 917

## Description

The present invention refers to a double-clip electrical interconnection clamp that can, for example, be used in a cabling system for the installation of an electrical apparatus in an electrical switchboard.

In electrical switchboards, above all but not exclusively of the industrial type, electrical energy busbars are used, for example fixed to supporting structures provided inside the electrical switchboards. Such busbars have the load devices to be powered electrically connected to them, with the interposition of electrical apparatuses, like circuit breakers, disconnectors, protection devices and other.

Historically, busbars have widely been made entirely from copper. Recently, due to the increase in price of copper, there is a tendency to make such busbars from aluminium, which is currently less expensive than copper. In this case, however, in order to be able to ensure a good and stable electrical connection, given aluminium's natural tendency to oxidise on the surface, it is necessary to at least partially coat aluminium busbars with an electrically conductive material suitable for preserving good surface conductivity characteristics over time. For example, aluminium busbars are known that are at least partially coated with a thin surface layer of tin, copper or another material having similar properties in terms of conductivity and resistance to oxidation. For example, the thin surface coating layer is applied to busbars through electrodeposition techniques or in some cases by spraying.

It is clear that the surface coating of a busbar must cover at least a portion thereof at which the electrical connection with the apparatuses to be powered is made, either directly or through the interposition of suitable interface devices.

In the state of the art, in order to make the electrical connections to the busbars, for some time clamps with studs that can be rotated by a quarter turn or screw clamps have been used (in the latter case generally a clamping plate is actuated by the rotation of a screw/pin to slide axially with respect to the screw/pin). For this purpose, the busbars of the prior art have at least one portion having a C or L-shaped cross section.

However, it has been observed that clamps with studs or screw clamps of the state of the art described above tend to excessively scratch the busbar, therefore causing damage in the case in which the busbar is equipped with a conductive surface coating, which compromises the characteristics of surface conductivity of the busbars.

The interconnection systems of the prior art described above also have the further drawbacks of not allowing quick interconnection and of not allowing the possibility of safely carrying out electrical interconnections, for example to reconfigure an electrical switchboard or to remove/extract a circuit breaker, when the busbars are fed with power, in other words when the electrical switchboard is live.

As an alternative to the clamps with studs or screw clamps described above, in the state of the art double-clip interconnection systems have been proposed. In practice, these are systems equipped with clips having opposing elastic arms and that can be locked onto the busbars. One particular example of a double-clip interconnection system of the state of the art is described in the French patent application published with number FR 2 562 344.

The prior art double-clip interconnection systems, with respect to cabling systems in which clamps with studs or screw clamps are used, allow faster interconnections to be made and allow cabling systems to be made in which it is possible to safely establish/interrupt electrical connections when the electrical switchboard is live. In order to ensure stable interconnections, given the substantial electromechanical stress forces to which the parts of an electrical switchboard can be subjected, it is necessary to make sure for the clamping force of the jaws of the clips to be sufficiently high. This of course means that the elastic resistance exerted by the jaws, i.e. by the opposite arms, of the clips at the moment when the clips are locked on a distribution busbar is also high. From this it can be seen how the double clip interconnection systems of the prior art also have the drawback of excessively scratching the busbars causing damage to them particularly in the case in which they are equipped with a surface coating of electrically conductive material.

The general object of the present invention is to provide an improved double-clip electrical interconnection clamp. A particular object of the present invention is to provide an improved double-clip electrical interconnection clamp that is able to overcome the drawbacks described above with reference to the prior art and that allows quick interconnections to be made, that, if necessary, allows cabling systems to be made in which it is possible to establish/interrupt interconnections inside the board when the latter is live and that, when such a clamp is locked onto a busbar, is such as to avoid the busbar being excessively

FR 2 377 103 discloses another example of prior art double clip interconnection clamp. A further object of the present disclosure is to provide a double clip interconnection clamp which can be able to reach, with respect to the connection clamp of FR 2 377 103, a better and uniform electrical contact and which is at the same time relatively simple to be assembled.

The aforementioned objects are reached by a double-clip interconnection clamp as defined in the main claim in its general embodiment and as defined in the dependent claims in its particular embodiments.

A further object of the present invention is to provide an interconnection base as defined in claim 8 a cabling system as defined in claims 9 or 10 and an electrical switchboard as defined in claim 11.

The features and advantages of the double-clip electrical interconnection clamp that forms the object of the present invention shall become clearer from the following description of its embodiments, given hereafter for indicating and not limiting purposes, with reference to the attached figures, where:

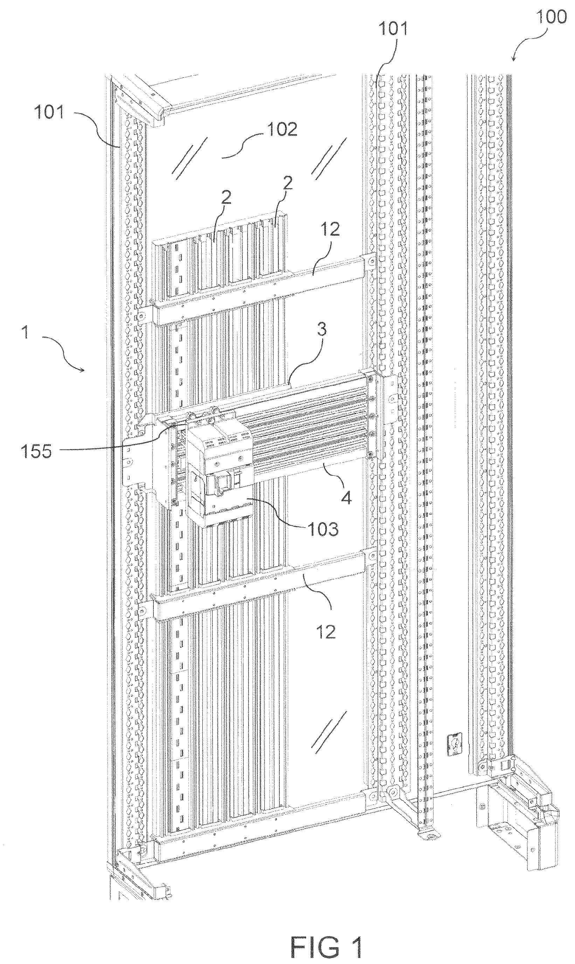

- figure 1 shoes an axonometric view of a portion of an electrical switchboard, of which two functional uprights and a panel are essentially shown, in which it is possible to see a cabling system comprising vertical busbars, on which a first base, electrically connected to the busbars, and a second base, comprising horizontal busbars and electrically connected to the first base, are mounted, said second base having an electrical apparatus, in the example a moleded case circuit breaker, mounted on it;
- figure 2a shows an axonometric view of the electrical switchboard of figure 1 in greater detail;
- figure 2b shows a cross section view of a busbar;
- figure 2c shows a cross section view of an enlarged detail of the busbar of figure 2b;

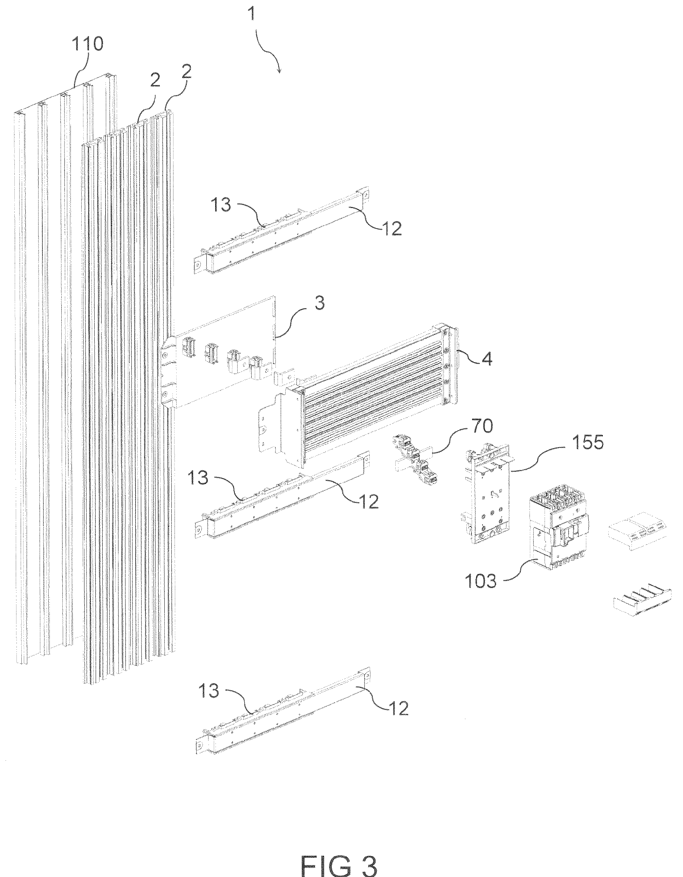

- figure 3 shows an exploded axonometric view of the cabling system of figure 1;
- figure 4 shows an axonometric view of the vertical busbars of the cabling system of figure 3, said busbars being coupled with a supporting profile made from insulating material;
- figure 5 shows an axonometric view of an enlarged detail of figure 4;
- figure 6 shows an axonometric view with detached parts of an attachment cross-piece of the vertical busbars to the electrical switchboard;
- figure 7 shows an axonometric view of the portion of board represented in figure 1 from which the circuit breaker and the second base have been removed;
- figure 8 shows an axonometric view of an enlarged detail of figure 7;
- figure 9 shows an axonometric view of the first base, said view essentially showing the front face of such a base;
- figure 10 shows an axonometric view of the first base, said view essentially showing the rear face of such a base;
- figure 11a shows an axonometric view of a double-clip connection terminal, or double-clip interconnection clamp, adapted to be associated with the first base;
- figure 11b shows a section view of the double-clip interconnection clamp of figure 11a;
- figure 12 shows an exploded perspective view of the double-clip interconnection clamp of figure 11a;
- figure 13 shows a perspective view of the second base showing the front face of such a base;
- figure 14a shows a perspective view of a portion of the second base of figure 13, wherein said base has been sectioned along the axis A-A of figure 13;
- figure 14b shows a side section view of a busbar of the second base of figure 13;
- figure 15 shows a perspective view of the second base, showing the rear face of such a base;
- figure 16 shows a perspective view of a portion of the second base of figure 13, wherein said base has been sectioned along the axis A-A of figure 13;
- figure 17 shows a perspective and exploded view of the second base of figure 13;
- figure 18 shows an axonometric view of an interface device for the electrical connection of an electrical apparatus to the second base, essentially showing a front face of such a device;
- figure 19 shows an axonometric view of the interface device of figure 18 essentially showing the rear face of such a device;
- figure 20 shows an exploded axonometric front view of the interface device of figure 18;
- figure 21 shows an axonometric view of a supporting device for an electrical apparatus;
- figure 22 shows an exploded axonometric view of the supporting device of figure 21;
- figure 23 shows different views of a latch locking system of the supporting device of figure 21;
- figure 24 shows an axonometric view of an assembly of parts comprising the interface device of figure 18, the supporting device of figure 22 and a circuit breaker, said view essentially showing the rear face of such an assembly;
- figure 25 shows an axonometric view of the assembly of parts illustrated in figure 24 in which the front face of such an assembly can be seen;
- figure 26 shows an axonometric view of the assembly of figure 24 coupled with the second base of figure 13, essentially showing the rear face of such a base;
- figure 27 shows an enlarged detail of figure 26;
- figure 28 shows a plan view of a detail of the cabling system of figure 1, in which the double-clip interconnection clamp of figure 11a is shown in a first operating configuration; and
- figure 29 shows a plan view of a detail of the cabling system of figure 1, in which the double-clip interconnection clamp of figure 11a is shown in a second operating configuration.

With reference to the attached figures, reference numeral 100 globally indicates an electrical switchboard or cabinet. Since electrical switchboards are containment devices that are now widely known, for the sake of simplicity just two uprights 101 and a panel 102 of the electrical switchboard 100 have essentially been represented in the figures, the face of which facing towards the space inside the box is visible.

In order to carry out the mechanical attachment and the electrical connection, i.e. the installation, of at least one electrical apparatus 103, like for example a circuit breaker, in the electrical switchboard 100, a cabling system 1 is provided that in the described example comprises:
- at least one busbar 2;
- at least one first base 3 able to be electrically associated with the at least one busbar 2 and suitable for being fixed to a supporting structure of the electrical switchboard 100;
- at least one second base 4 suitable for being electrically associated with the first base 3 so that in operating conditions it can be separated from the first base 3 without interrupting the voltage feeding to the at least one busbar 2 ensuring optimal protection against electrical accidents during use and removal.

In accordance with an embodiment, the first base 3 is also suitable for being electrically associated with the busbar 2 so that in operating conditions it can be separated from it without interrupting the voltage feeding to the at least one busbar 2, ensuring optimal protection against electrical accidents during use and removal.

In a currently preferred embodiment, the busbar 2 is an aluminium busbar provided with an at least partial surface coating of tin and/or copper. In accordance with an alternative embodiment, the busbar 2 is a busbar made entirely from copper.

In accordance with a further embodiment, the cabling system 1 also comprises at least one supporting device 155, or interconnection base 155, suitable for mechanically fixing and electrically coupling at least one respective electrical apparatus 103 to the second base 4. Preferably, such an electrical apparatus 103 is a molded case circuit breaker. More preferably, and not for limiting purposes, such an electrical apparatus 103 is of the modular type for which reason many modular electrical apparatuses 103 can be installed adjacent to one another, through respective supporting devices 55, at the second base 4.

In accordance with a further embodiment, the supporting device 155 can be electrically associated with the second base 4 so that in operating conditions it can be separated from the second base 4 without interrupting the voltage feexing to the least one busbar 2 ensuring optimal protection against electrical accidents during use and removal.

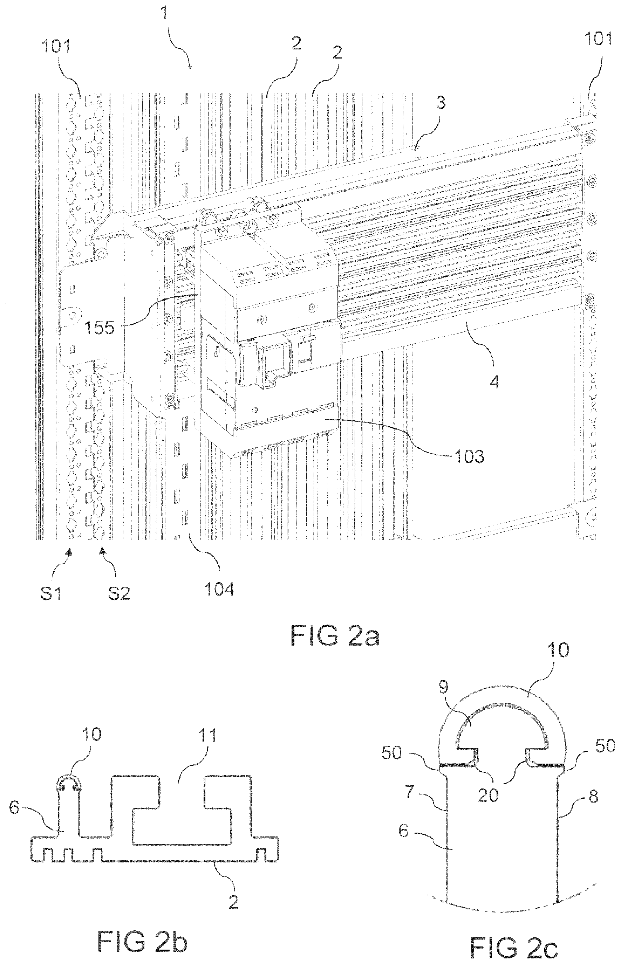

In accordance with a further embodiment that, with its characteristics, can be provided jointly or separately from the characteristics that have been or will be described, with particular reference to figures 2b and 2c, the cabling system 1 comprises:
- at least one busbar 2 having a body with longitudinal profile having a cross section comprising:
- optionally, at least one C-shaped portion defining a seat 11;
- aprojecting extension or pin 6 forming, in the longitudinal direction, an electrical contact rail suitable for electrical connection at least with two of its opposing surfaces 7, 8;
- the pin 6 having an apex portion 9 frontally facing and associated with a protective shell 10;
- the protective shell 10 being made from insulating material and being stably associated with said apex portion 9 of the pin 6 also when the busbar 2 is in use.

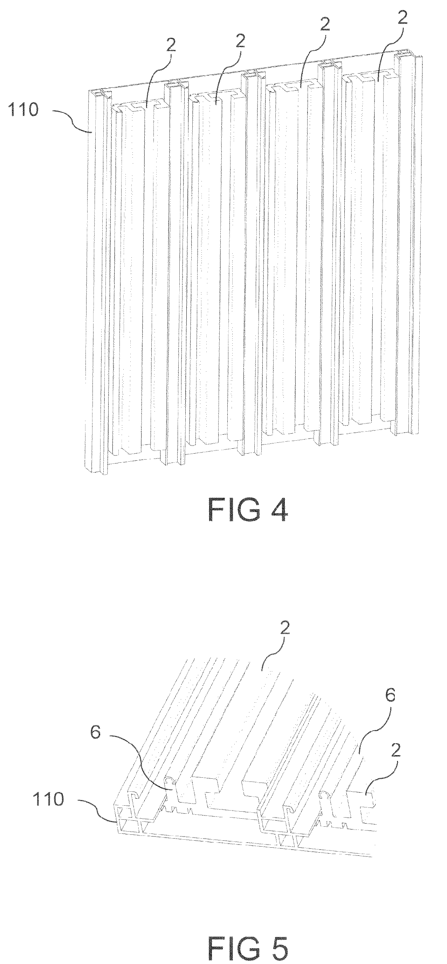

In accordance with an embodiment, the cabling system 1 comprises a supporting plate 110 made from insulating material onto which many busbars 2 are fixed (in the example represented four busbars 2). Preferably, the busbars 2 are inserted in suitable seats foreseen in the supporting plate 110 (figures 4 and 5). For example, each busbar 2 is slidingly received in a respective seat of the supporting plate 110.

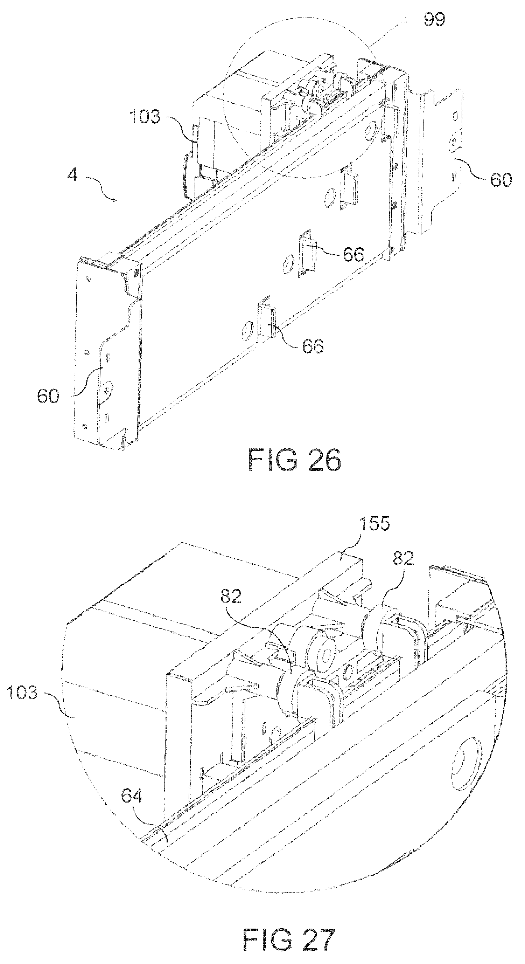

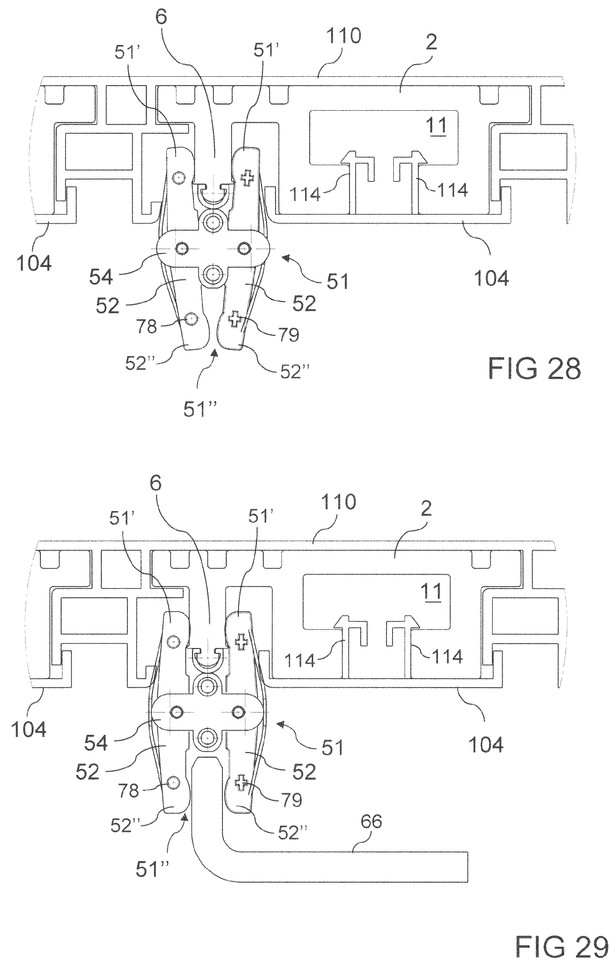

Frontally, insulating covers 104 capable of ensuring IP20 protection are associated, in accordance with a snap-in embodiment, with the busbars 2. With reference to figures 27 and 29, in the embodiment in which the busbar 2 has a cross section with a frontal C-shape at least laterally, the aforementioned insulating covers 104 are panels of insulating material equipped, on the side intended to face towards the busbars 2, with pairs of projecting toothed hooks 114 intended to be locked into the seat 11 of the busbars 2 to clip the insulating covers 104 into a respective busbar 2.

In the embodiment in which the cross section of the busbar 2 also has at least one pin 6 arranged laterally to the frontal C-shape, it is possible to foresee for there to be a minimum space between the IP20 cover and the pin 6, allowing an electrical connection to be made but preventing a finger from being introduced according to the "finger test". Said pin 6 has opposite electrical contact surfaces 7 and 8. The apex 9 of the pin facing the electrical apparatus 103 is associated with a protective shell 10 made from insulating material for IP20 protection. Advantageously, the shell 10 is associated with an undercut clip-in system in holding seats 20 defined in the apex 9. Preferably, the pin 6 is equipped with opposite ridges 50 that make it possible to avoid a double-clip connection terminal 51 being able to undesirably uncouple from the pin 6.

The system described above allows the front portion of the busbar to be completely free, so as to be able to branch off over the entire length of the busbar, both on the pin 6 (through double-clip interconnection terminals) and on the C-shaped seat (through conventional clamps with studs that can be actuated with a ¼ turn).

The assembly formed by the supporting plate 110 and the busbars 2 is preferably fixed to the electrical switchboard 100, and in particular to the uprights 101 through one or more attachment cross-pieces 12, 13. In accordance with an embodiment, each attachment cross-piece comprises an insulator 13, preferably made as a bridge wire of insulating material, intended to face the busbars 2 and the supporting plate 110, and a metal cross-piece 12. Preferably, but not for limiting purposes, the supporting plate 110 is fixed in the way described above to a bottom panel 102 of the electrical switchboard 100.

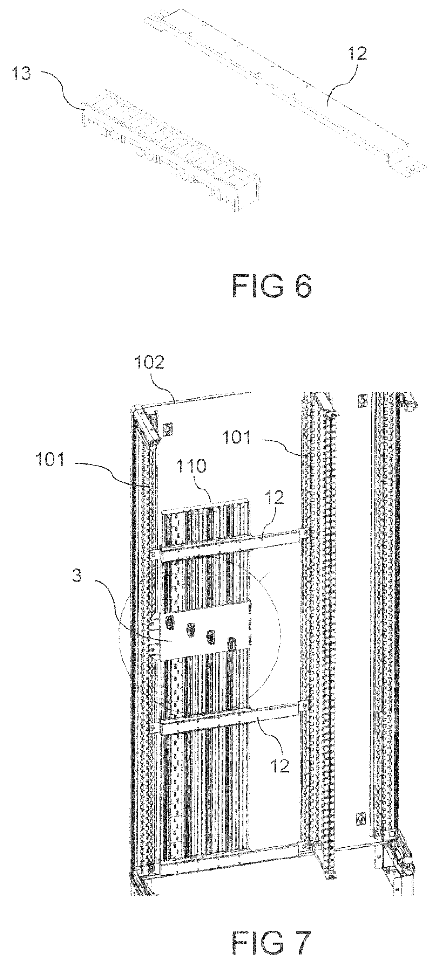

As shown in figures 7 ed 8, in the particular example of cabling system described, the busbars 2 have a first base 3 removably electrically connected to them.

Preferably, the first base 3 has a substantially cased main body made from electrically insulating material. Such a main body is, for example, a quadrangular plate and has at least one seat 31 open on two opposite main faces of the first base 3 and suitable for housing a respective double-clip interconnection clamp 51 (in other words an interconnection clamp 51 comprising two opposing clips).

The double-clip interconnection clamp 51 comprises, in particular, a first clip part 51' intended to clamp a respective busbar 2 to electrically connect the clamp 51 to the busbar 2 and an opposite second clip part 51", the latter being intended to interact with a connection terminal 66 of the second base 4.

The first clip part 51' of the clamp 51 is locked onto a respective busbar 2, in particular coupling with the lateral surfaces 7, 8 of the pin 6, ensuring a correct and stable electrical connection between the busbar 2 and the clamp 51. In accordance with a non-limiting embodiment, when the busbar 2 is made from aluminium and is coated on the surface and at least partially through a layer of material with good electroconductive properties and relatively high resistance to oxidation (like for example copper or tin), such a coating layer covers at least the lateral surfaces 7, 8 of the pin 6.

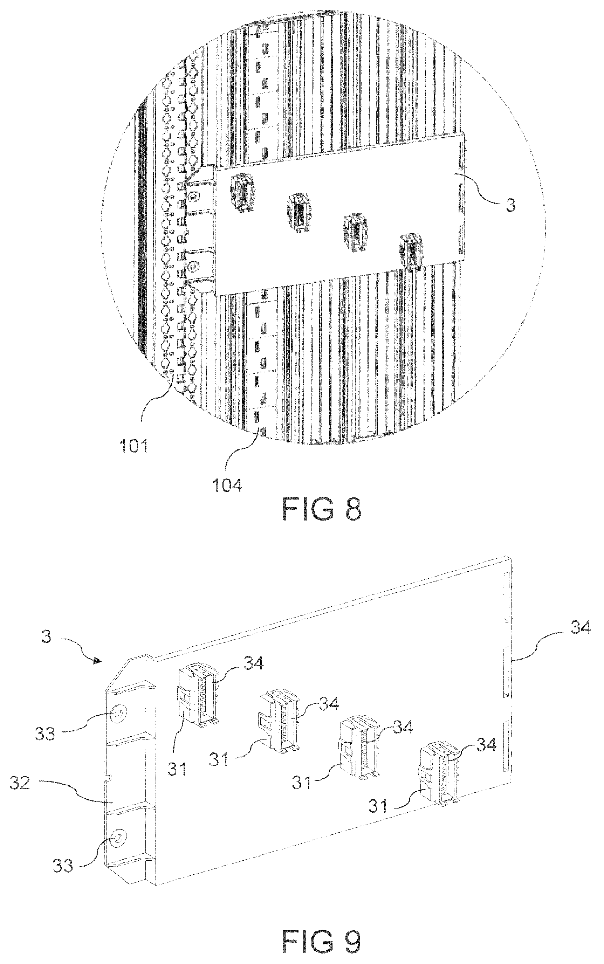

In figures 8 and 9 it is possible to see the first base 3 in which the seats 31 are formed in which the double-clip interconnection clamps 51 are inserted, covered by IP20 insulating protective caps 34 (figure 9), to prevent dangerous access (meaning in the sense of the requirements related to the "finger test") to the second clip part 51". In accordance with an embodiment, in the first base 3, each seat 31 of a clamp 51 is equipped with a pair of essentially C or U-shaped projecting tabs 36 that are arranged on opposite sides with respect to the clamp 51 and that project from the face of the base 3 intended to face towards the busbars 2. Such projecting tabs 36 are configured so as to be able to be arranged straddling the pins 6 of the busbars 2 to establish a fixed attachment height of the first base 3 with respect to the busbars 2.

Laterally, the first base 3 is provided with attachment means to the electrical switchboard 100, in particular in a particularly preferred embodiment:
- on one side 33 attachment means to an upright 101 are provided, said attachment means preferably comprising at least one hole 33 adapted to interact with a respective selected hole or an aligned array of holes S2 provided on the upright 101; and
- on the other side 34 attachment means to the supporting plate 110 are provided, said attachment means comprising at least one fastening element 35 adapted to interact with a matching fastening element provided in the supporting plate 110.

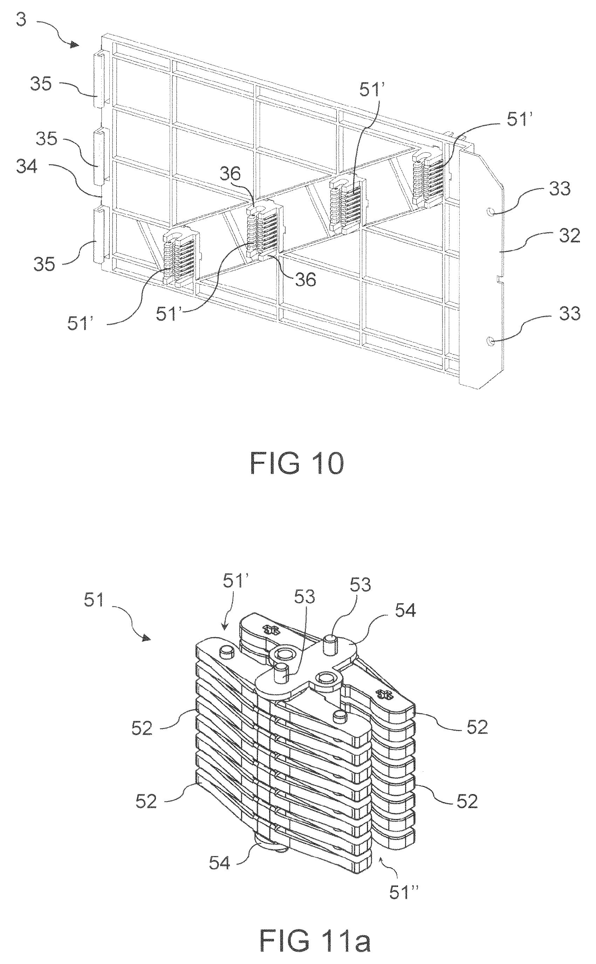

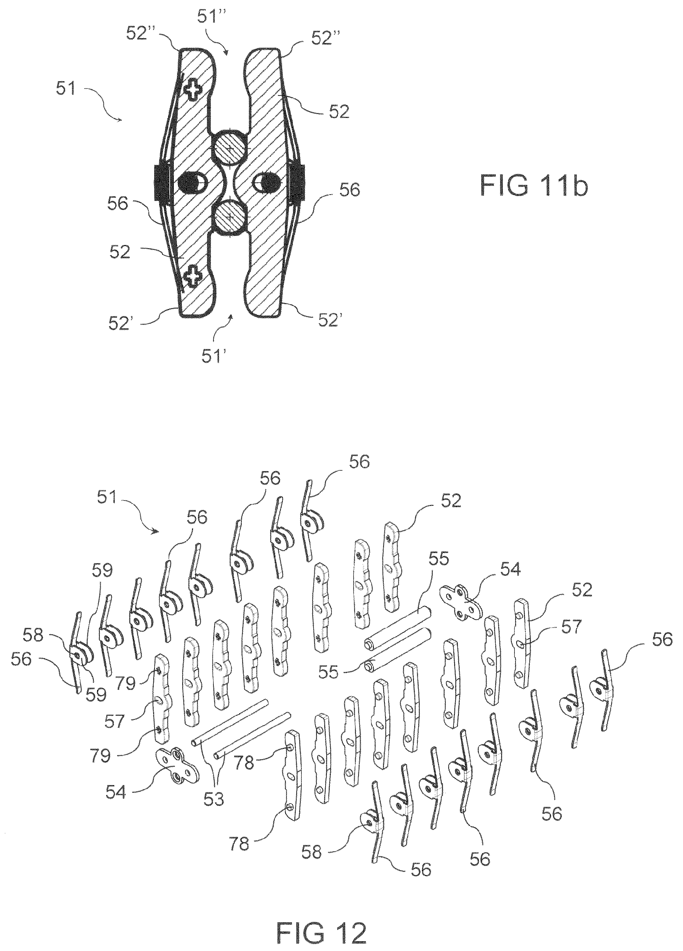

With reference to figures 11a, 11b and 12, the double-clip interconnection clamp 51 comprises:
- a plurality of relatively rigid electroconductive plates 52 aligned, or rather stacked, along two parallel rows;
- a supporting structure 53, 54, 55 of the two parallel stacks of plates 52;
- mechanical coupling elements 53, 57 with play adapted to pivot the plates 52 to the supporting structure 53, 54, 55, so that such plates 52 can rotate and translate with respect to the supporting structure.

It should be observed that each stack of parallel plates forms a pack of plates 52. It should be kept in mind that in the present description by plate we mean, in general, an arm or bridge that has two opposite faces having a greater area than the area of the remaining faces.

In the particular embodiment represented in the figures, the mechanical coupling elements witj play comprise a pair of pins 53 provided in the supporting structure 53, 54, 55 and a plurality of slotted through holes 57, each defined in a respective plate 52, each of said pins 53 being associated with a respective stack of plates 52 and passing through slotted holes 57 of the associated stack of plates.

Preferably, each of the slotted holes 57 is provided substantially at a central portion of a respective plate 52.

It should be observed that in the particular example represented, not for limiting purposes, the number of plates 52 for each stack is equal to eight.

The double-clip interconnection clamp 51 comprises a plurality of relatively elastic elements contrained to the supporting structure 53, 54, 55, each associated with a respective electroconductive plate 52.

It should be observed that in the particular example represented the relatively elastic elements each comprise a sheet spring 56 and more preferably a leaf spring 56.

The elastic elements 56 are hinged, or more precisely rotatably hinged, to the supporting structure and more preferably to the pins 53 of the latter so that such elastic elements 56 are essentially able to rotate around such pins 53, possibly with reduced or low clearance so that any possibility of translation of the elastic elements with respect to the supporting structure 53, 54, 55 is negligible.

In accordance with the embodiment represented in the figures, each of said elastic elements comprises a pair of parallel tabs 59 that project centrally from the leaf spring and in each of which a through hole 50 is defined. Between such parallel tabs 59 a seat is in practice defined inside of which a central portion of a respective electroconductive plate 52 is received.

In accordance with an advantageous embodiment, the supporting structure 53, 54, 55 includes at least one spacer element 55 arranged between the two stacks of plates 52 and suitable for keeping such stacks spaced apart in opposition to the action exerted by the elastic elements 56. Preferably, the at least one spacer element 55 comprises a pair of pins oriented perpendicularly with respect to the planes on which said plates 52 lie. More preferably, such pins have end portions fixed (for example riveted) to opposite closing plates 54 located in the supporting structure 53, 54, 55. It can be seen how both the pins 53 and the pins 55 are oriented perpendicularly to the planes on which the electroconductive plates 52 lie.

In accordance with a preferred and not limiting embodiment, the plates 52 are made from copper coated with tin and the leaf springs 56 are made from harmonic steel. Preferably, the pins 53 and the pins 55 are made from steel.

Advantageously, the slotted holes 57 provided in the electroconductive plates 52 allow the two stack of plates to translate with respect to one another, to come closer together, under the effect of the pushing of the springs 56 or to move apart in contrast to the elastic force exerted by the springs 56. With reference to figures 28, 29, it can be seen that the slotted holes 57 allow the plates 52 to also be rotated around the pins 53, for which reason pairs of facing plates 52 respectively belonging to the first and to the second row of plates 52 can both translate with respect to one another and each rotate around the respective pin 53. Again with reference to figures 27 and 29 it can be seen that in practice the possibility of rotation of the plates 52 allows two first facing end portions 52' of two corresponding plates 52 respectively belonging to the first and to the second stack to move apart simultaneously determining a coming together of the two second opposite end portions 52" of the same plates 52. For example, this occurs when a double-clip clamp 51 is locked onto a pin 6 of a busbar 2 so that the two end portions 52' interact with the contact surfaces 7, 8 of the pin 6 and when no terminal is locked to the double-clip clamp 51 on the side of the end portions 52'.

In practice, it should be observed that if the locking of the interconnection clamp 51 to the busbar 2 occurs before inserting the terminal 66 on the side of the other clip part of the clamp 51, the resistance exerted by the end portions 51' of the plates 52 to the locking between them of the pin 6 will be relatively moderate, for which reason it is advantageously possible to avoid excessively scratching the contact surfaces 7 and 8 of the pin 6. Indeed, it should be observed that in this case the plates 52 are forced to rotate, and such a rotation can occur without a substantial deformation of the elastic elements that can rotate together with the plates. Advantageously, what has been described above implieas that no lubrication of the double-clip clamps 51 is necessary.

Again with reference to figures 28 and 29 it should be observed that, having already locked the double-clip clamp onto the busbar 3 (operating configuration represented in figure 28), during the insertion of a connection terminal 66 (for example associated with the second base 4) on the free side of the clamp 51 the resistance exerted by the end portions 52' of the plates 52 shall be relatively high, for which reason once the terminal 66 has been inserted (arriving at the operating configuration of figure 29) it will be possible to obtain a strong and stable interconnection between the terminal 66 and the busbar 2 through the clamp 51. Therefore, it is clear that the insertion just described can involve a certain scratching of the terminal 66. However, it is known that the scratching of a terminal 66 is less problematic than the scratching of a busbar, particularly (but not limitingly) in the case in which the busbar is made from aluminium and is at least partially coated with a surface layer of material like for example copper or tin and in the case in which the connection terminal 66 is made from copper.

In accordance with a further embodiment, between adjacent electroconductive plates 52 of the same stack of plates spacer elements 78, 79 are provided that are suitable for keeping the contact surface between adjacent plates 52 contained, so as to reduce the risk of melting and welding of said adjacent plates.

In accordance with a currently preferred embodiment, the spacer elements comprise at least one pair of elements 78 projecting from a first face of each of the plates 52. For example, such projecting elements 78 are cylindrical pins. More preferably, on a second face of the plates opposite the first face, aligned on the opposite side with respect to the projecting elements, recesses 79 are defined having a shape such as to further reduce the contact surface between two adjacent plates. In the particular example represented, such recesses 79 are cross-shaped. It should be noted how in this way the contact surface between two adjacent plates 52 is reduced to the four inner corners of the outer edge that defines the cross. It should be noted that it is possible to foresee other shapes for the projecting elements 78 and for the recesses 79 in order to reduce the contact surface of adjacent plates of the same stack.

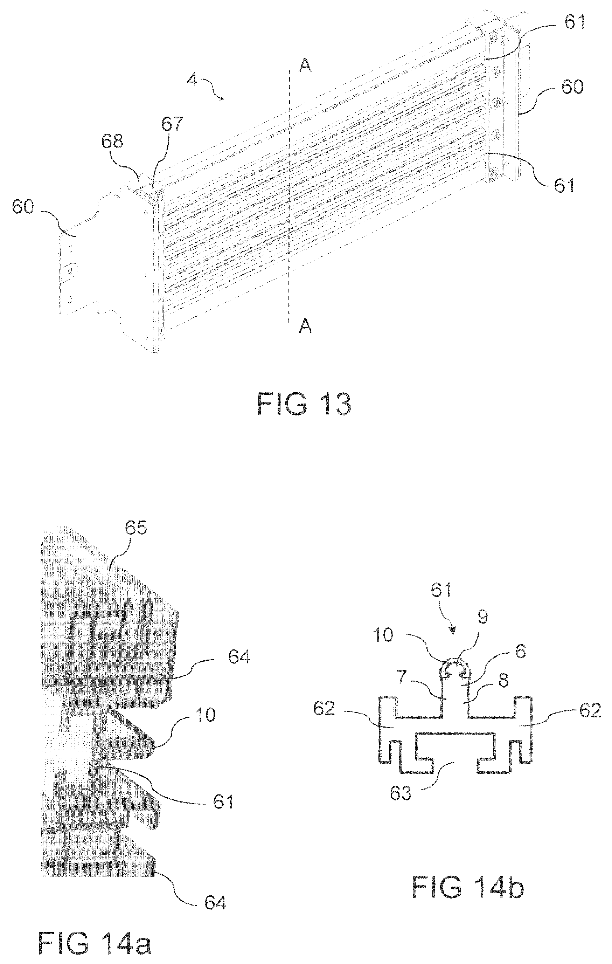

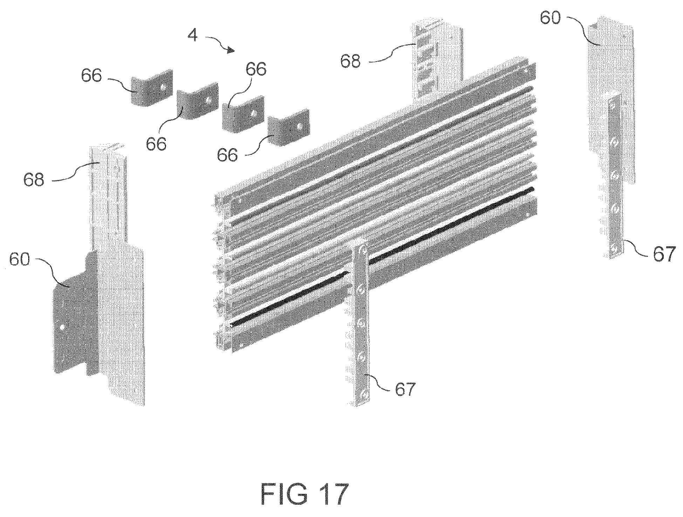

With reference to figures 13-17 the second base 4 is shown, comprising at least one busbar 61, the second base 4 being able to be electrically connected to the first base 3 to connect such a busbar 61 to a respective double-clip clamp 51 through at least one connection terminal 66 provided in the second base 4.

In the particular example described, the second base 4 comprises four busbars 61, parallel to one another and, during use, intended to be arranged perpendicular to the busbars 2 described earlier.

In accordance with a further general embodiment that, with its characteristics, can be provided jointly or separately from the features that have been or will be described, with particular reference to figure 14b, it is foreseen for the busbar 61 to have a body with a longitudinal profile having a cross section comprising:
- at least one C-shaped portion defining a seat 63;
- an projecting portion or pin 6 forming, in the longitudinal direction, an electrical contact rail suitable for the electrical connection at least with two of its opposite surfaces 7, 8;
- said pin 6 having a front facing apex portion 9 associated with a protective shell 10;
- said protective shell 10 being made from insulating material and stably associated with said apex portion 9 of the pin 6 also when the busbar 61 is being used.

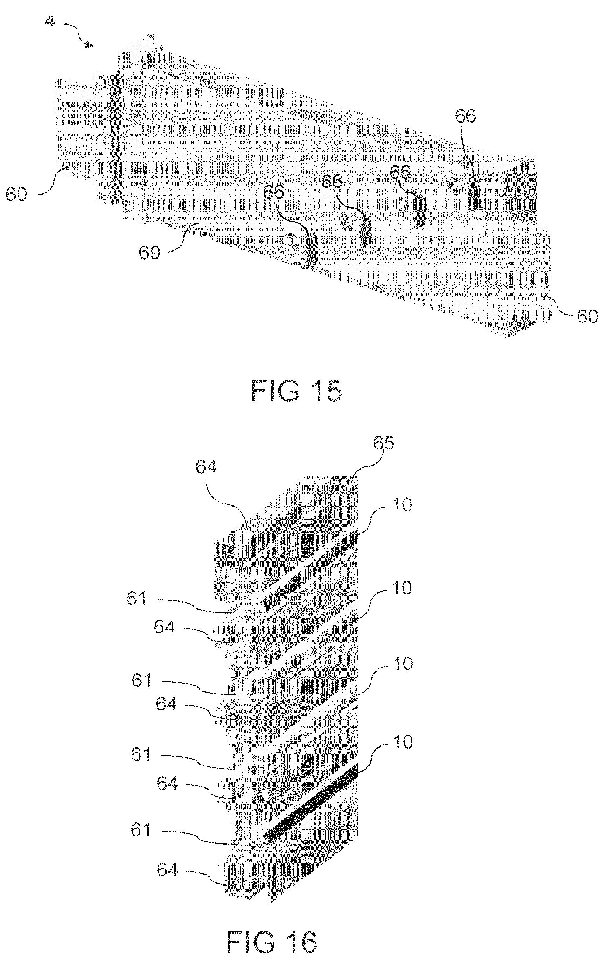

More preferably, two T-shaped lateral profiles 62 are also provided in the busbar 61 to form a pack of busbars in which each busbar 61 is arranged an locked between two profiles of insulating material 64 (figure 16).

Preferably, the second base 4 also comprises two opposite head elements 67, 68 (each formed from a first part 67 and a second part 68) between which the busbars 61 and the insulating profiles 64 are arranged.

Preferably, the assembly formed by the head elements, from the busbars 61 and from the insulating profiles 61 is configured so as to make front and lateral faces of the second base 4 with finger test (or IP 20) protection. Preferably, in the second base 4 the two outer profiles of insulating material 64 have a metal cover strip 65 juxtaposed over them to allow stable fastening to the second base 2 of a supporting device for a circuit breaker equipped with locking means to the second base 4, for example in the form of rotary latches.

Preferably, lateral attachment brackets 60, preferably made from metallic material, are provided associated with the head elements 67, 68 for the attachment of the second base 4 to a pair of uprights 101 of the electrical switchboard (preferably selected holes of the array of holes S1 are used, based in the particular desired attachment height).

As can be seen in figure 15, projecting on the rear side of the second base 2 are pin connection terminals 66 (which, for example, represent end portions of respective L-shaped terminals each connected, for example welded or fixed in another way to and in electrical contact with, a respective busbar 61) intended to lock into the double-clip interconnection clamps 51 of the first base 3. In the second base 4 a rear closing panel 69 made from insulating material is also preferably provided.

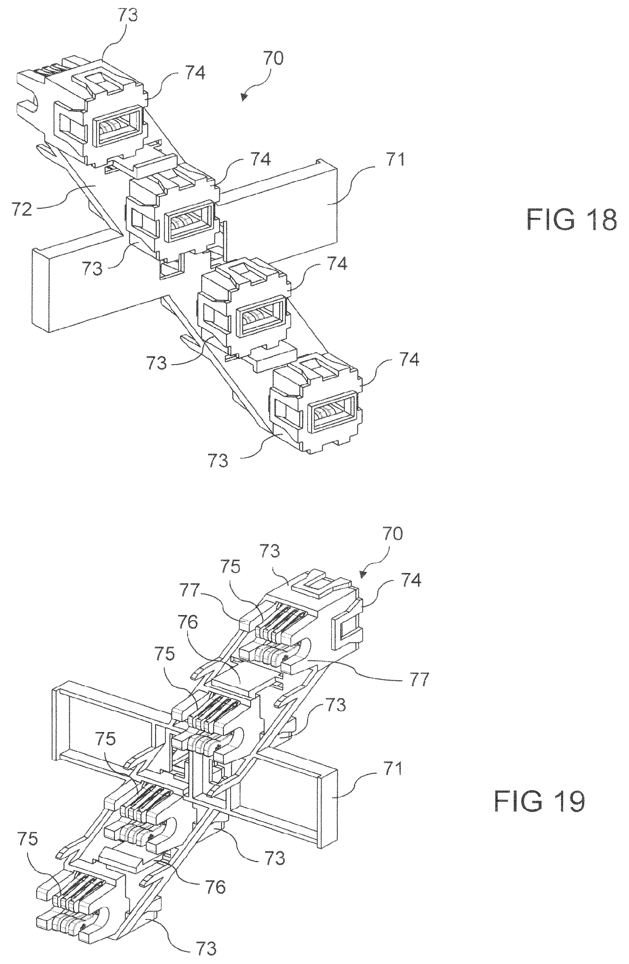

With reference to figures 18-20, the cabling system preferably comprises an interface device 70, able to be electrically and mechanically coupled with the second base 4 on the side thereof opposite to the side facing the first base 3.

Preferably, the interface device comprises at least one double-clip interconnection clamp 73, preferably of the type totally similar to the one described previously in greater detail (more preferably comprising rows of plates having a smaller number of plates, in the example represented with three plates per row). A first clip part of said double-clip clamp 75, i.e. the one visible in figure 19, is intended to interact with a respective busbar 61 of the second base 4 (and in particular with the surfaces 7,9 of the pin 6 of the latter). The second opposite clip part is provided for the electrical connection to the double-clip clamps 75 of pin connection terminals provided in the supporting device 155 of the electrical apparatus 103, in order to electrically connect the electrical apparatus to the busbars of the second base 2.

In a particularly advantageous embodiment, the interface device 70 comprises seats open on two opposite sides each suitable for receiving a respective double-clip interconnection clamp 75. At one of said opposite sides, the seats 73 have protective caps 74 coupled with them, for example locked in, suitable for preventing access to the second clip part of the clamps 75 (meant in the sense of what is prescribed by the "finger test", or IP 20, since it is actually necessary to provide an opening for the engagement of PIN terminals in the second clip part of the clip clamps 75). It should be noted how the seats 73 of the interface device 70 are also each equipped with pairs of C or U-shaped tabs 77 totally similar to those already described with reference to the first base 3. Preferably, the seats 73 are arranged along a diagonal plate 72 made from electrically insulating material, and a transversal plate 71 is also foreseen that crosses the diagonal plate and is also made from electrically insulating material. According to a further embodiment, the interface device 70 also comprises fastening elements 76 to mechanically fix, in a removable manner, the interface device 70 to the second base 4. For example, such elements comprise two opposite tabs 76 provided with an end equipped with a small tooth and suitable for interacting with the busbars of the second base 4 or with the insulating profiles thereof.

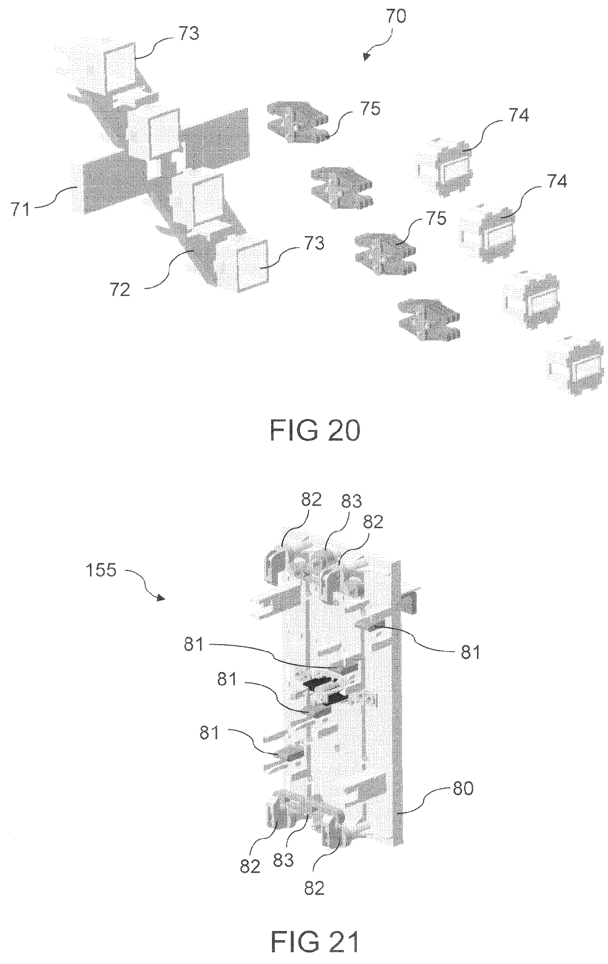

With reference to figures 21-27 we shall now describe the supporting device 155 for the electrical apparatus 103. Such a device 155 can be mechanically coupled with the second base 4, preferably directly through a locking system, preferably with latches, and electrically coupled with it through the interface device 70.

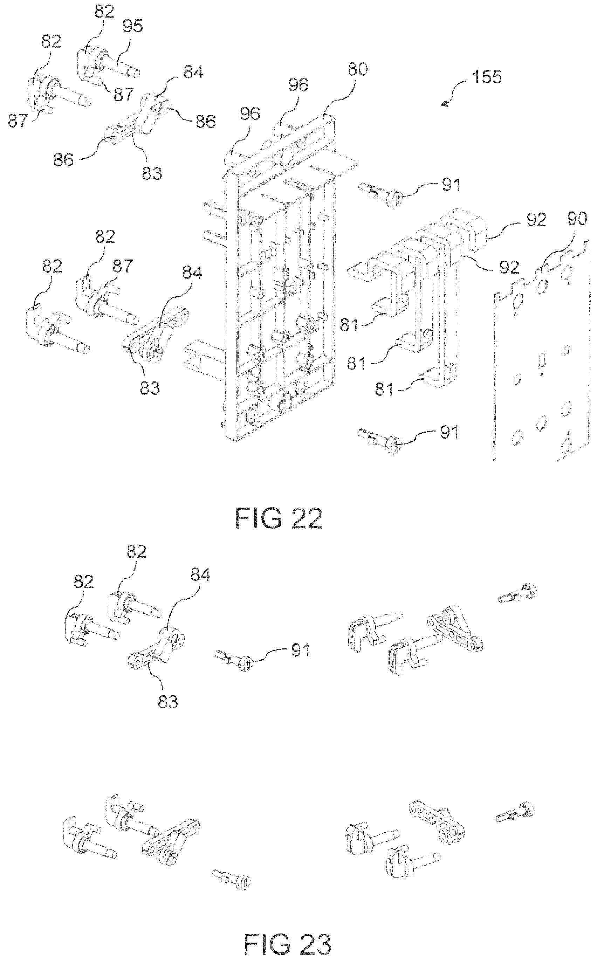

The supporting device 155 comprises a substantially plate-shaped and quadrangular main body 81, having one face intended to face the second base 4 from which electrical connection pins project, which preferably represent terminal portions of conductive strips having opposite end portions 92 intended to lock directly in the connection clamps (for example screw clamps) of the electrical apparatus 103. As represented in figure 22, the main body 80 can be foreseen to be hollow and having an open side that can be blocked through a cover 90, so as to be able to at least partially receive the aforementioned conductive strips.

For the mechanical attachment of the supporting device 155 to the second base 4 it is advantageously possible to provide a latch locking system. Preferably, at least a pair of latches 82, preferably metallic (for example made at least partially from aluminium) are provided, mechanically connected through a linkage 83, 84 to be actuated rotating a single actuation element, like for example a pin 91. Preferably, one pair of latches 82 is provided per side.

In a particularly preferred embodiment, the latches 82 are such as to interact with the metallic elements 65 provided in the second base 4 and already described with reference to figures 13-16.

Preferably, each latch 82 has a pin 95 suitable for being received in a respective bushings 96 provided in the supporting device 155.

Figure 23 shows some assembly details of the latch locking system from which it is possible to easily see how such a locking system works. In particular it can be seen how a rotary arm 84 is provided that rotates as a unit with the pin 91 (the latter can, for example, be set in rotation, for example through the blade of a screwdriver) and rotatably hinged to the centre of a connection arm 83, around a different rotation axis parallel to the rotation axis of the pin 91. Each of the pins 95 has a projecting arm 87 suitable for being hinged to the connection arm 83. In the example represented, each of the projecting arms 87 has a pin portion suitable for being received in a respective hole 86 provided in the connection arm 83 to be rotatably hinged to the connection arm 83. As is clear from the figures, by rotating the actuation pin 91 a rotation of the arm 84 and consequently a movement of the connection arm 83 is caused. The latter, through the arms 87, causes a simultaneous rotation of the pins 95 of the latches 82.

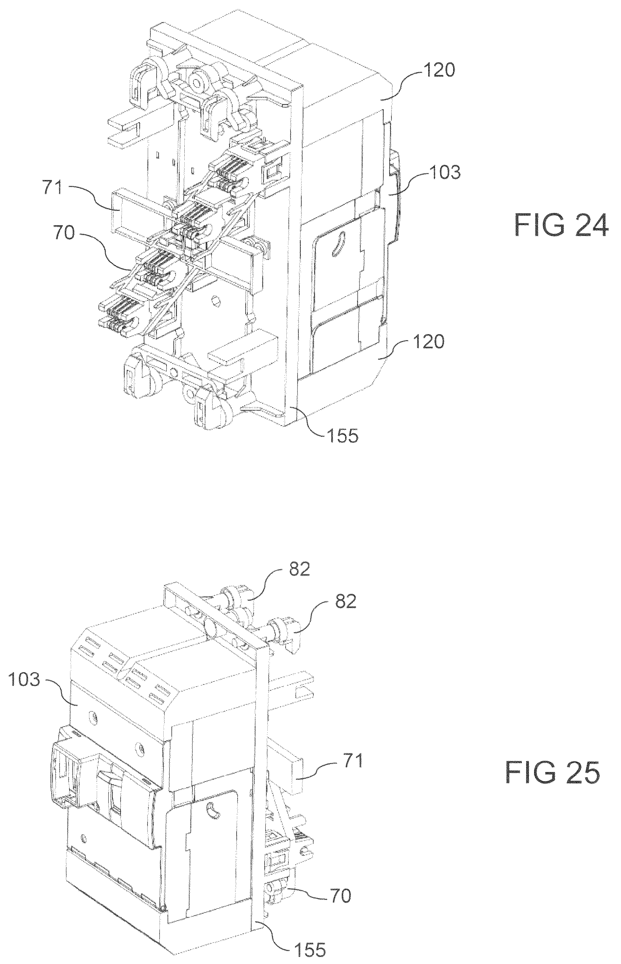

Figure 24 shows the assembly comprising the electrical apparatus or circuit breaker 103, the supporting device 155 and the interface device 70. In a particularly preferred embodiment, it is possible to provide protective caps 120 coupled with the circuit breaker 103, to avoid dangerous access to the clamps of the circuit breaker. The circuit breaker can be fixed to the supporting device 155 through screws or pins, which are optionally and preferably associated with an entry-prevention or tamper-signalling device or with a graphical indication that highlights how dangerous it is to tamper with it.

In figures 25 and 26 the assembly of figure 23 is shown coupled and electrically connected to the second base 4. Finally, figure 27 shows the enlarged detail 99 of figure 26.

Those which have been described are just particular embodiments of a double-clip interconnection clamp in accordance with the present invention, and of supporting/interface devices that can comprise such a clamp, to which the man skilled in the art will be able to bring the modifications necessary for adapting it to particular applications, without however departing from the scope of protection of the present invention as defined by the attached claims.

For example, in a possible variant embodiment of a double-clip interconnection clamp, it is possible to foresee electroconductive plates 52 that have, as an alternative to the slotted hole 57, a pin with circular cross-section and providing a slotted hole or recess in suitable brackets to be provided in the supporting structure, said slotted hole or recess being such as to receive said pin with circular cross-section.

Finally, it should be noted that, although the use of a double-clip clamp of the type described above is currently particularly advantageous in the case in which one of the two clip parts of the clamp is intended to be applied to a pin of a busbar with scratchable surface coating, a double-clip interconnection clamp as described above can have further advantageous uses in general to make electrical interconnections, since its use is not exclusively limited to locking onto distribution busbars and in particular since it is not exclusively limited to locking onto busbars of the type with an electroconductive surface coating. For example, it is possible to foresee that a supporting base and interface for a circuit breaker, as for example described in patent application EP 2 003 672 or in patent application EP 2 019 406, be provided with one or more double-clip interconnection clamps of the type described above (by providing suitable seats for the clamps in the body of such a base) to quickly and safely interconnect the connection terminals of the circuit breaker to any power supply system of a electrical switchboard able to be interfaced with one of the two clip parts of the clamp, for example to make cabling systems with removable and/or withdrawable circuit breakers.

## Claims

1. Double-clip electrical interconnection clamp (51) comprising:
- a plurality of relatively rigid electroconductive plates (52) aligned along two parallel stacks;
- a supporting structure (53, 54, 55) of said parallel stacks of plates (52);
- mechanical coupling elements (53, 57) with play adapted to pivot the plates (52) to the supporting structure (53, 54, 55), so that such plates (52) can rotate and translate with respect to the supporting structure, said mechanical coupling elements with play comprising a pair of pins (53) provided in said supporting structure and a plurality of slotted holes (57) each defined in a respective plate (52), each of said pins (53) being associated with a respective stack of plates (52) and crossing slotted holes (57) of the associated stack of plates;
**characterized in that**
in each of said stacks said double-clip electrical interconnection clamp (51) comprises a plurality of elastic elements (56) constrained to said supporting structure (53, 54, 55) and each associated with a respective plate (52), wherein said elastic elements (56) are rotatably hinged to said pins (53) of the supporting structure (53, 54, 55).

2. Double-clip electrical interconnection clamp (51) according to claim 1, wherein each of said slotted holes (57) is defined substantially at a central portion of a respective plate (52).

3. Double-clip electrical interconnection clamp (51) according to claim 1, wherein said elastic elements each comprise a leaf spring (56).

4. Double-clip electrical interconnection clamp (51) according to claim 3, wherein each of said elastic elements comprises a pair of parallel tabs (59) that project centrally from said leaf spring (56) and in each of which a through hole (58) is defined.

5. Double-clip electrical interconnection clamp (51) according to any claim 1, wherein said supporting structure (53, 54, 55) includes at least one spacer element (55) arranged between said stacks of plates (52) and adapted to keep said stacks spaced apart in contrast to the action exerted by said elastic elements (56).

6. Double-clip electrical interconnection clamp according to claim 5, wherein said at least one spacer element comprises a pair of pins (55) oriented perpendicularly with respect to the planes on which said plates (72) lie.

7. Double-clip electrical interconnection clamp (51) according to any one of the previous claims, wherein the plates (52) also comprise spacer elements (78, 79) suitable for reducing a contact surface between two parallel and adjacent plates in the same stack of plates.

8. Electrical interconnection base (3) **characterised in that** it comprises at least one interconnection clamp in accordance with any one of the previous claims.

9. Cabling system (1) for the mechanical attachment and the electrical connection of at least one electrical apparatus (103) to an electrical switchboard (100) **characterised in that** it comprises a double-clip interconnection clamp (51) in accordance with any one of claims 1 to 7.

10. Cabling system (1) according to claim 9, also comprising an aluminium busbar (2) at least partially coated on the surface with a surface layer of electroconductive material with relatively high conductivity and resistance to oxidation, the busbar having a pin (6) with two contact surfaces (7,8) intended to interact with said interconnection clamp (51).

11. Electrical switchboard comprising a cabling system (1) according to claim 9 or claim 10.

## Patentansprüche

1. Elektrische Doppelverbindungsklemme (51), umfassend:
- mehrere relativ starre elektrisch leitende Platten (52), welche entlang zwei parallelen Stapeln ausgerichtet sind;
- eine Haltestruktur (53, 54, 55) der parallelen Stapel aus Platten (52);
- mechanische Koppelelemente (53, 57) mit Spiel, welche dafür ausgebildet sind, die Platten (52) derart an der Haltestruktur (53, 54, 55) anzulenken, dass sich die Platten (52) drehen und gegenüber der Haltestruktur verschieben können, wobei die mechanischen Koppelelemente mit Spiel ein Paar Stifte (53), welche in der Haltestruktur angeordnet sind, und mehrere Langlöcher (57) umfassen, welche jeweils in einer entsprechenden Platte (52) ausgebildet sind, wobei jeder der Stifte (53) einem entsprechenden Stapel aus Platten (52) zugehörig ist und Langlöcher (57) des zugehörigen Plattenstapels kreuzt;
**dadurch gekennzeichnet, dass**
in jedem der Stapel die elektrische Doppelverbindungsklemme (51) mehrere elastische Elemente (56) enthält, welche an der Haltestruktur (53, 54, 55) befestigt sind und die jeweils einer entsprechenden Platte (52) zugeordnet sind, wobei die elastischen Elemente (56) drehbar an den Stifte (53) der Haltestruktur (53, 54, 55) angebracht sind.

2. Elektrische Doppelverbindungsklemme (51) nach Anspruch 1, wobei jedes der Langlöcher (57) im Wesentlichen an einem mittleren Abschnitt einer entsprechenden Platte (52) ausgebildet ist.

3. Elektrische Doppelverbindungsklemme (51) nach Anspruch 1, wobei die elastischen Elemente jeweils eine Blattfeder (56) umfassen.

4. Elektrische Doppelverbindungsklemme (51) nach Anspruch 3, wobei jedes der elastischen Elemente ein Paar paralleler Ansätze (59) umfasst, welche zentral von der Blattfeder (56) vorstehen und in denen jeweils eine Durchgangsbohrung (58) ausgebildet ist.

5. Elektrische Doppelverbindungsklemme (51) nach Anspruch 1, wobei die Haltestruktur (53, 54, 55) zumindest ein Distanzelement (55) enthält, welches zwischen den Stapeln aus Platten (52) angeordnet und dafür ausgebildet ist, die Stapel entgegen der von den elastischen Elementen (56) ausgeübten Wirkung beabstandet zu halten.

6. Elektrische Doppelverbindungsklemme nach Anspruch 5, wobei das mindestens eine Distanzelement ein Paar Stifte (55) umfasst, welche zu den Ebenen, auf denen die Platten (72) liegen, senkrecht ausgerichtet sind.

7. Elektrische Doppelverbindungklemme (51) nach einem der vorhergehenden Ansprüche, wobei die Platten (52) auch Distanzelemente (78, 79) umfassen, welche dafür geeignet sind, eine Kontaktfläche zwischen zwei parallelen und benachbarten Platten in dem gleichen Plattenstapel zu reduzieren.

8. Elektrische Verbindungsbasis (3), **dadurch gekennzeichnet, dass** sie mindestens eine Verbindungsklemme nach einem der vorhergehenden Ansprüche umfasst.

9. Verkabelungssystem (1) für die mechanische Befestigung und die elektrische Verbindung mindestens einer elektrischen Einrichtung (103) an eine elektrische Schaltanlage (100), **dadurch gekennzeichnet, dass** es eine Doppelverbindungsklemme (51) nach einem der Ansprüche 1 bis 7 umfasst.

10. Verkabelungssystem (1) nach Anspruch 9, ferner umfassend eine Aluminium-Stromschiene (2), welche auf der Oberfläche mit einer Oberflächenschicht aus elektrisch leitendem Material mit relativ hoher Leitfähigkeit und Oxidationsfestigkeit zumindest teilweise beschichtet ist, wobei die Stromschiene einen Stift (6) mit zwei Kontaktflächen (7, 8) hat, welcher dafür vorgesehen ist, mit der Verbindungsklemme (51) zusammenzuwirken.

11. Elektrische Schaltanlage, umfassend ein Verkabelungssystem (1) nach Anspruch 9 oder Anspruch 10.

## Revendications

1. Pince d'interconnexion électrique à double clip (51) comprenant :
- une pluralité de plaques (52) électroconductrices relativement rigides alignées le long de deux piles parallèles ;
- une structure de support (53, 54, 55) desdites piles parallèles de plaques (52) ;
- des éléments de couplage mécanique (53, 57) avec jeu adaptés pour pivoter les plaques (52) vers la structure de support (53, 55, 54) de sorte que de telles plaques (52) puissent tourner et translater par rapport à la structure de support, lesdits éléments de couplage mécanique avec jeu comprenant une paire de broches (53) prévues dans ladite structure de support et une pluralité de trous fendus (57) définis chacun dans une plaque respective (52), chacune desdites broches (53) étant associée à une pile respective de plaques (52) et croisant des trous fendus (57) de la pile associée de plaques ;
**caractérisée en ce que**
dans chacune desdites piles, ladite pince d'interconnexion électrique à double clip (51) comprend une pluralité d'éléments élastiques (56) contraints sur ladite structure de support (53, 54, 55) et chacun associés à une plaque respective (52), dans laquelle lesdits éléments élastiques (56) sont articulés de manière rotative auxdites broches (53) de la structure de support (53, 54, 55).

2. Pince d'interconnexion électrique à double clip (51) selon la revendication 1, dans laquelle chacun desdits trous fendus (57) est défini sensiblement sur une partie centrale d'une plaque (52) respective.

3. Pince d'interconnexion électrique à double clip (51) selon la revendication 1, dans laquelle lesdits éléments élastiques comprennent chacun un ressort à lame (56).

4. Pince d'interconnexion électrique à double clip (51) selon la revendication 3, dans laquelle chacun desdits éléments élastiques comprend une paire de pattes parallèles (59) qui font saillie centralement dudit ressort à lame (56) et dans chacune desquelles un trou débouchant (58) est défini.

5. Pince d'interconnexion électrique à double clip (51) selon la revendication 1, dans laquelle ladite structure de support (53, 54, 55) inclut au moins un élément espaceur (55) agencé entre lesdites piles de plaques (52) et adapté pour maintenir lesdites piles espacées par opposition à l'action exercée par lesdits éléments élastiques (56).

6. Pince d'interconnexion électrique à double clip (51) selon la revendication 5, dans laquelle ledit au moins un élément espaceur comprend une paire de broches (55) orientées perpendiculairement par rapport aux plans, sur lesquels lesdites plaques (72) reposent.

7. Pince d'interconnexion électrique à double clip (51) selon l'une quelconque des revendications précédentes, dans laquelle les plaques (52) comprennent aussi des éléments espaceurs (78, 79) adaptés pour réduire une surface de contact entre deux plaques parallèles et adjacentes dans la même pile de plaques.

8. Base d'interconnexion électrique (3), **caractérisée en ce qu'**elle comprend au moins une pince d'interconnexion selon l'une quelconque des revendications précédentes.

9. Système de câblage (1) pour l'attache mécanique et la connexion électrique d'au moins un appareil électrique (103) à un panneau de distribution (100) électrique, **caractérisé en ce qu'**il comprend une pince d'interconnexion électrique à double clip (51) selon l'une quelconque des revendications 1 à 7.

10. Système de câblage (1) selon la revendication 9, comprenant aussi une barre bus en aluminium (2) revêtue au moins partiellement sur la surface d'une couche de surface de matériau électroconducteur avec une conductivité et une résistance à l'oxydation relativement élevées, la barre bus ayant une broche (6) avec deux surfaces de contact (7, 8) destinées à interagir avec ladite pince d'interconnexion (51).

11. Panneau de distribution électrique comprenant un système de câblage (1) selon la revendication 9 ou 10.
